# EUROPEAN PATENT APPLICATION

(11) **EP 4 325 691 A1**
(43) Date of publication of application: **21.02.2024**
(21) Application number: 22787800.6
(22) Date of filing: 25.01.2022
(51) Int. Cl.: H02J 7/35, H02J 3/32, H02J 3/38, H02J 3/46, H01M 10/44, H01M 10/48

(54) **ELECTRIC POWER CONVERSION SYSTEM AND ELECTRIC POWER CONVERSION DEVICE**

(30) Priority: 16.04.2021 JP 2021069817
(71) Applicant: Panasonic Intellectual Property Management Co., Ltd., Kadoma-shi, Osaka 571-0057 (JP)
(72) Inventor: NORITAKE, Yoshinori, Kadoma-shi, Osaka 571-0057 (JP); DONOMOTO, Yoshihisa, Kadoma-shi, Osaka 571-0057 (JP)
(74) Representative: Appelt, Christian W.
(86) International application number: PCT/JP2022/002626
(87) International publication number: WO 2022/219872

(57) **Abstract**

A first electric power conversion device (10) is capable of converting a power generated by a power generator (4a) that generates power by using renewable energy into an AC power of a predetermined voltage and outputting the AC power to a power receiving point of a power grid (2). A second electric power conversion device (20) includes a converter (21) capable of charging and discharging a power storage unit (5), an inverter (22), and a control unit (25). In the event of a power outage of the power grid (2), an off-grid output path of the second electric power conversion device (20) and an on-grid output path of the first electric power conversion device (10) are connected. When a power input to an AC side of the inverter (22) exceeds or is expected to exceed a maximum chargeable power of the power storage unit (5), the control unit (25) exercises control to suppress or cut off an output of the first electric power conversion device (10).

## Description

### [TECHNICAL FIELD]

The present disclosure relates to electric power conversion systems and electric power conversion devices that can use power generated by a power generator by using renewable energy in the event of a power outage.

### [BACKGROUND ART]

In Japan, the need for self-consumption of electricity generated by solar photovoltaic power generation systems is increasing due to the reduction of feed-in tariffs for solar photovoltaic power generation. In order to store power generated by a solar photovoltaic power generation system in a storage battery without reverse flow, installers of the solar photovoltaic power generation system are increasingly introducing new power storage systems.

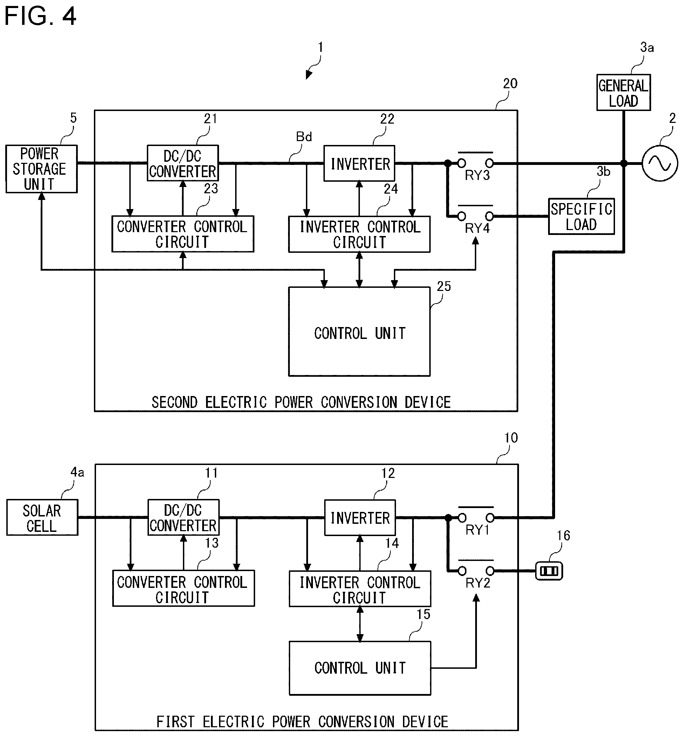

When an existing solar photovoltaic power generation system and a newly installed power storage system output off-grid power independently (for example, see Fig. 4) in the event of a power outage, the output of the power conditioner of the solar photovoltaic power generation system becomes unstable due to the influence of solar radiation fluctuations. Further, the power generated by the solar photovoltaic power generation system cannot be charged in the storage battery.

Therefore, the off-grid output of the newly installed power storage system and the grid output of the existing solar photovoltaic power generation system may be linked in the event of a power outage (for example, see Fig. 5 and patent literature 1).

### [Patent Literature 1] JP2014-180159

### [SUMMARY OF INVENTION]

### [TECHNICAL PROBLEM]

In the above-described configuration, however, the solar photovoltaic power may be generated excessively depending on the charging status of the storage battery, which could stop the entire system.

The present disclosure addresses the issue described above, and a purpose thereof is to provide a electric power conversion system and an electric power conversion device that can effectively utilize the generated power while suppressing unnecessary stop of the entire system in the event of a power outage.

### [SOLUTION TO PROBLEM]

An electric power conversion system according to an aspect of the present disclosure includes: a first electric power conversion device capable of converting a power generated by a power generator that generates power by using renewable energy into an AC power of a predetermined voltage and outputting the AC power to a power receiving point of a power grid; and a second electric power conversion device including a converter capable of charging and discharging a power storage unit, an inverter connected between a DC bus to which the converter is connected and the power receiving point, and a control unit that controls the inverter. In the event of a power outage of the power grid, an off-grid output path of the second electric power conversion device and an on-grid output path of the first electric power conversion device are connected, and, when a power input to an AC side of the inverter exceeds or is expected to exceed a maximum chargeable power of the power storage unit, the control unit exercises control to suppress or cut off an output of the first electric power conversion device.

### [ADVANTAGEOUS EFFECTS OF INVENTION]

According to the present disclosure, it is possible to utilize the generated power effectively while suppressing unnecessary stop of the entire electric power conversion system in the event of a power outage.

### [BRIEF DESCRIPTION OF DRAWINGS]

Fig. 1 is a diagram for explaining the electric power conversion system according to the embodiment;
Fig. 2 is a diagram for explaining excessive power generation;
Fig. 3 is a flowchart for explaining an exemplary operation of the second electric power conversion device according to the embodiment in the event of a power outage;
Fig. 4 is a diagram for explaining the electric power conversion system according to comparative example 1; and
Fig. 5 is a diagram for explaining the electric power conversion system according to comparative example 2.

### [DESCRIPTION OF EMBODIMENTS]

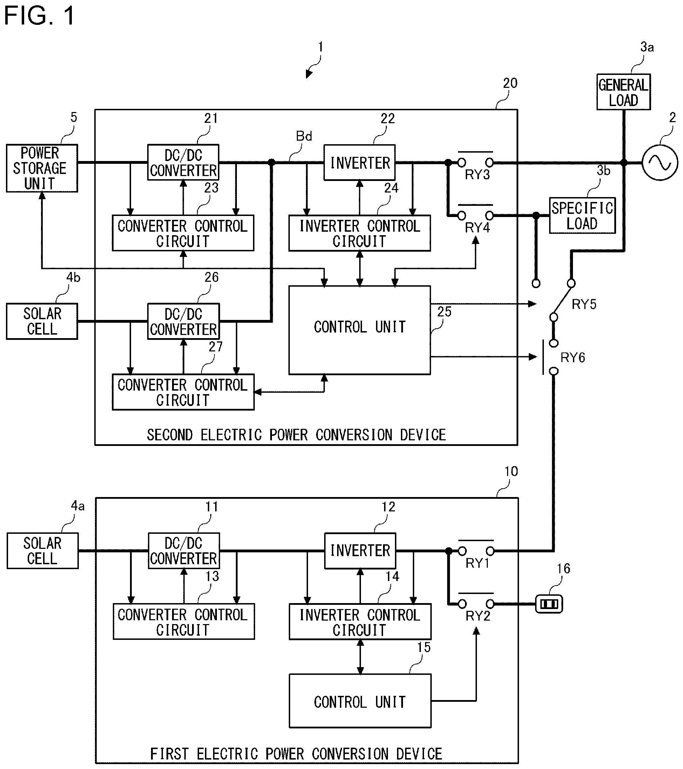

Fig. 1 is a diagram for explaining the electric power conversion system 1 according to the embodiment. The electric power conversion system 1 includes a first electric power conversion device 10 and a second electric power conversion device 20. The first electric power conversion device 10 is a power conditioner for a solar photovoltaic power generation system. The second electric power conversion device 20 is a power conditioner for a hybrid power storage system (also called an solar power storage system). The second electric power conversion device 20 is an integrated power conditioner (also called a power station (registered trademark)) in which the power conditioner function for a solar photovoltaic power generation system and the power conditioner function for a power storage system are integrated.

The electric power conversion system 1 according to the embodiment is a system in which the existing old-style first electric power conversion device 10 and the newly installed new-type second electric power conversion device 20 are coordinated. In the present embodiment, it is assumed that the old-style first electric power conversion device 10 does not include a communication port, and the first electric power conversion device 10 and the second electric power conversion device 20 are not connected by a communication line.

The first electric power conversion device 10 includes a DC/DC converter 11, an inverter 12, a converter control circuit 13, an inverter control circuit 14, a control unit 15, an on-grid relay RY1, an off-grid output relay RY2, and an AC outlet 16.

The first solar cell 4a is a power generator that directly converts light energy into DC power using the photovoltaic effect. A silicon solar cell, a solar cell made of a compound semiconductor or the like, a dye-sensitized solar cell, an organic thin film solar cell, etc. is used as the first solar cell 4a. The first solar cell 4a is connected to the DC/DC converter 11 of the first electric power conversion device 10 and outputs the generated power to the first electric power conversion device 10. The DC/DC converter 11 is a converter capable of adjusting the voltage of a DC power output from the first solar cell 4a. The DC/DC converter 11 may be comprised of, for example, a boost chopper.

The converter control circuit 13 controls the DC/DC converter 11. The converter control circuit 13 subjects the DC/DC converter 11 to MPPT (Maximum Power Point Tracking) control to maximize the output power of the first solar cell 4a. Specifically, the converter control circuit 13 measures the input voltage and the input current of the DC/DC converter 11, which are the output voltage and the output current of the first solar cell 4a, to estimate the generated power of the first solar cell 4a. The converter control circuit 13 generates a command value for setting the generated power of the first solar cell 4a to the maximum power point (optimal operating point) based on the measured output voltage and the estimated generated power of the first solar cell 4a. For example, the converter control circuit 13 searches for the maximum power point by changing the operating point voltage in predetermined steps according to the hill climbing method and generates a command value to maintain the maximum power point. The DC/DC converter 11 performs a switching operation according to a drive signal based on the generated command value.

The inverter 12 converts the DC power supplied from the DC/DC converter 11 into an AC power and outputs the AC power. The inverter control circuit 14 controls the inverter 12. In a basic mode of control, the inverter control circuit 14 controls the inverter 12 so that the voltage of the DC bus between the DC/DC converter 11 and the inverter 12 maintains a target value. Specifically, the inverter control circuit 14 detects the voltage of the DC bus and generates a command value for matching the detected bus voltage to the target value. The inverter control circuit 14 generates a current command value for raising the output power of the inverter 12 when the voltage of the DC bus is higher than the target value and generates a current command value for reducing the output power of the inverter 12 when the voltage of the DC bus is lower than the target value. The inverter 12 performs a switching operation according to a drive signal based on the generated current command value.

The output path of the inverter 12 is branched into an on-grid output path and an off-grid output path. An on-grid relay RY1 is inserted in the on-grid output path of the inverter 12. The on-grid output path of the first electric power conversion device 10 is connected to the power receiving point of a commercial power grid (hereinafter simply referred to as a grid 2) or the off-grid output path of the second electric power conversion device 20 via a parallel-off relay RY6 and an output switching relay RY5. A distribution board (not shown) is installed at the power receiving point. In this embodiment, a single-phase 3-wire type 100V/200V power supply is assumed as the grid power supply. A general load 3a is connected to the distribution board. The general load 3a is a generic term for the load in the customer premise.

The output switching relay RY5 is a C contact relay that selectively connects the on-grid output path of the first electric power conversion device 10 to the power receiving point of the grid 2 or the off-grid output path of the second electric power conversion device 20. The parallel-off relay RY6 is a relay for disconnecting the first electric power conversion device 10 from the grid 2 and the electric power conversion system 1.

An off-grid output relay RY2 is inserted in the off-grid output path of the inverter 12. The off-grid output path of the first electric power conversion device 10 is connected to the AC outlet 16. In the event of a power outage, the user can use a home appliance by plugging the outlet plug of the home appliance into the AC outlet 16.

The control unit 15 controls the entire first electric power conversion device 10 in an integrated manner. The control unit 15 can be implemented by cooperation of hardware resources and software resources or only by hardware resources. Analog elements, microcontrollers, DSP, ROM, RAM, ASICs, FPGAs, and other LSIs can be used as hardware resources. Programs such as firmware can be used as software resources.

In the on-grid mode, the control unit 15 controls the on-grid relay RY1 to be on (closed) and the off-grid output relay RY2 to be off (open). In the off-grid operation mode during a power outage, the control unit 15 controls the on-grid relay RY1 to be off and the off-grid output relay RY2 to be on.

The second electric power conversion device 20 includes a DC/DC converter 21, an inverter 22, a converter control circuit 23, an inverter control circuit 24, a DC/DC converter 26, a converter control circuit 27, a control unit 25, an on-grid relay RY3, and an off-grid output relay RY4.

The newly installed second solar cell 4b may be a solar cell of the same type as the existing first solar cell 4a or may be another type of solar cell. The second solar cell 4b is connected to the DC/DC converter 26 of the second electric power conversion device 20 and outputs the generated power to the second electric power conversion device 20. The DC/DC converter 26 is a converter that is connected between the second solar cell 4b and a DC bus Bd and can adjust the voltage of the DC power output from the second solar cell 4b. The DC/DC converter 26 may be comprised of, for example, a boost chopper.

The converter control circuit 27 controls the DC/DC converter 26. In a basic mode of control, the converter control circuit 27 subjects the DC/DC converter 26 to MPPT control to maximize the output power of the second solar cell 4b. The converter control circuit 27 can also control the boost ratio of the DC/DC converter 26 so that the voltage of the DC bus Bd maintains a target value, or the measured value of the generated power of the second solar cell 4b maintains a target value. This is a control that may be initiated when it is necessary to suppress the power generation amount of the second solar cell 4b.

A power storage unit 5 can charge and discharge electric power and includes a storage battery such as a lithium ion storage battery, a nickel-hydrogen storage cell, and a lead battery. Instead of a storage battery, a capacitor such as an electric double-layer capacitor and a lithium ion capacitor may be provided.

The power storage unit 5 is connected to the DC/DC converter 21 and is controlled by the DC/DC converter 21 to be charged or discharged. The DC/DC converter 21 is a bidirectional DC/DC converter connected between the power storage unit 5 and the DC bus Bd to charge and discharge the power storage unit 5.

The converter control circuit 23 controls the DC/DC converter 21. In a basic mode of control, the converter control circuit 23 controls the DC/DC converter 21 to charge or discharge the DC/DC converter 21 based on the command value transmitted from the control unit 25. Charge/discharge control may be effected by, for example, constant current (CC) control or constant voltage (CV) control. Further, the converter control circuit 23 can also perform charge/discharge control of the DC/DC converter 21 so that the voltage of the DC bus Bd maintains the target value.

The inverter 22 is a bidirectional inverter connected between the DC bus Bd and the distribution board. The inverter 22 converts the DC power input from the DC bus Bd into an AC power and outputs the AC power resulting from the conversion to the distribution board via the on-grid relay RY3. The inverter 22 can convert AC power supplied from the grid 2 via the distribution board and the on-grid relay RY3 into a DC power and output the DC power resulting from the conversion to the DC bus Bd. Further, the inverter 22 can convert AC power supplied from the first electric power conversion device 10 via the output switching relay RY5 and the off-grid output relay RY4 into a DC power and output the DC power resulting from the conversion to the DC bus Bd.

The inverter control circuit 24 controls the inverter 22. In a basic mode of control, the inverter control circuit 24 controls the inverter 22 so that the voltage of the DC bus Bd maintains the target value. Specifically, the inverter control circuit 24 detects the voltage of the DC bus Bd and generates a command value for matching the detected bus voltage to the target value. The inverter 22 performs a switching operation according to a drive signal based on the generated command value.

The output path of the inverter 22 is branched into an on-grid output path and an off-grid output path. The on-grid relay RY3 is inserted in the on-grid output path of the inverter 22. The on-grid output path of the second electric power conversion device 20 is connected to the distribution board.

The off-grid output relay RY4 is inserted in the off-grid output path of the inverter 22. The off-grid output path of the second electric power conversion device 20 is connected to some of the branch wires in the distribution board. In the event of a power outage, power is fed only to the AC outlet connected to the branch wires. A specific load 3b (e.g., a lighting fixture, a refrigerator, etc.) for which power feed is desirably secured in the event of a power outage may be connected to the AC outlet connected to the branch wires. The off-grid output path of the second electric power conversion device 20 may be connected to all branch wires in the distribution board. In that case, power can be fed to the general load 3a even in the event of a power outage.

The control unit 25 controls the entire second electric power conversion device 20 in an integrated manner. The control unit 25 can be implemented by cooperation of hardware resources and software resources or only by hardware resources. Analog elements, microcontrollers, DSP, ROM, RAM, ASICs, FPGAs, and other LSIs can be used as hardware resources. Programs such as firmware can be used as software resources.

In the on-grid mode, the control unit 25 controls the on-grid relay RY3 to be on and the off-grid output relay RY4 to be off, and connects the output switching relay RY5 to the power receiving point of the grid 2. In the off-grid operation mode, the control unit 25 controls the on-grid relay RY3 to be off and the off-grid output relay RY4 to be on, and connects the output switching relay RY5 to the off-grid output path side of the second electric power conversion device 20. In the off-grid operation mode, the control unit 25 controls the inverter control circuit 24 to output an AC voltage corresponding to the grid frequency and the grid voltage from the inverter 22.

The control unit 25 can detect a power outage in the grid 2 based on the measured voltage on the AC side of the inverter 22. When the control unit 25 detects a power outage, the control unit 25 switches from the on-grid mode to the off-grid operation mode.

The control unit 25 can acquire the SOC (State Of Charge) of the power storage unit 5 from the control unit (not shown) in the power storage unit 5. The control unit 25 includes an SOC/SOP (State Of Power) table (not shown). The SOC/SOP table is a table describing the relationship between the SOC of the power storage unit 5 and the maximum chargeable power (maximum charge rate) of the power storage unit 5. The maximum chargeable power for each SOC of the power storage unit 5 varies depending on the type and capacity of the storage battery and the capacitor used in the power storage unit 5. The designer prepares the SOC/SOP table in advance according to the storage battery and the capacitor used.

The maximum chargeable power of the power storage unit 5 is 0 W when SOC=100%. As the SOC decreases, the maximum chargeable power increases. For simplicity, the maximum chargeable power may be fixed to the rated charging power of the power storage unit 5 in the range SOC=98-0%. The control unit 25 refers to the SOC/SOP table and identifies the maximum chargeable power of the power storage unit 5 based on the SOC of the power storage unit 5 acquired from the control unit of the power storage unit 5.

The control unit 25 calculates the AC power output from the inverter 22 or the AC power input to the inverter 22 based on the measurement voltage and the measured current on the AC side of the inverter 22.

In the event of a power outage, the control unit 25 controls the power derived from subtracting the power consumption of the specific load 3b from the output power of the first electric power conversion device 10 is equal to or less than the maximum chargeable power of the power storage unit 5 when the power input to the AC side of the inverter 22 (hereinafter referred to as the inverter input power) exceeds or is expected to exceed the maximum chargeable power of the power storage unit 5. That is, the control unit 25 exercises control to prevent excessive power generation. Methods of control for preventing excessive power generation include turning off the parallel-off relay RY6 and changing the output voltage of the inverter 22.

First, the method of exercising control for preventing excessive power generation by turning off the parallel-off relay RY6 will be described. The control unit 25 turns off the parallel-off relay RY6 when the inverter input power exceeds or is expected to exceed the maximum chargeable power. In one exemplary method of detecting a state in which the inverter input power is expected to exceed the maximum chargeable power, a determination may be made to see whether the inverter input power exceeds the power derived from subtracting a predetermined margin from the maximum chargeable power. When the inverter input power exceeds the power derived from subtracting a predetermined margin from the maximum chargeable power, the control unit 25 determines that the inverter input power is in a state of being expected to exceed the maximum chargeable power.

Alternatively, a determination may be made to see whether the maximum chargeable power is less than a first set value. When the maximum chargeable power is less than the first set value, the control unit 25 determines that the inverter input power is in a state of being expected to exceed the maximum chargeable power. For example, the first set value may be set to a value at a point when the maximum chargeable power starts to decrease sharply.

Alternatively, a determination may be made to see whether the SOC of the power storage unit 5 exceeds a second set value. When the SOC of the power storage unit exceeds the second set value, the control unit 25 determines that the inverter input power is in a state of being expected to exceed the maximum chargeable power. For example, the second set value may be set to a value near full charge (e.g., 98%).

The method of exercising control to prevent excessive power generation by changing the output voltage of the inverter 22 will now be described. The control unit 25 reduces, based on the maximum chargeable power and the maximum output current of the first electric power conversion device 10, the output voltage of the inverter 22 so that the output power of the first electric power conversion device 10 is equal to or less than the maximum chargeable power, when the inverter input power exceeds or is expected to exceed the maximum chargeable power.

Given that the maximum output current of the first electric power conversion device 10 is 30A and the maximum chargeable power of the power storage unit 5 is 3000 W, for example, the control unit 25 reduces the output voltage of the inverter 22 to 100 V (=3000 W/30 A) or less. Thereby, it is possible to prevent the inverter input power from exceeding the maximum chargeable power even if an unloaded condition occurs.

When the inverter input power exceeds or is expected to exceed the maximum chargeable power, the control unit 25 may change the output voltage of the inverter 22 to a voltage that causes the first electric power conversion device 10 to detect an abnormality and stop operating.

The first electric power conversion device 10 includes an undervoltage relay (UVR) (not shown) as a grid protective relay. An undervoltage relay (UVR) is installed as a measure for isolated operation detection and for addressing instantaneous voltage drop. The grid connection regulations stipulate that the output voltage of the first electric power conversion device 10 is reduced to 80% or lower for 1 second continuously as a condition for the undervoltage relay (UVR) to detect an undervoltage. As the undervoltage relay (UVR), the on-grid relay RY1 or a gate block of the inverter 12 may be used.

As described above, when the control unit 25 of the second electric power conversion device 20 detects a power outage, the control unit 25 switches the connection destination of the output switching relay RY5 from the power receiving point side of the grid 2 to the off-grid output path side of the second electric power conversion device 20 and causes the inverter 22 to output an AC voltage corresponding to the grid frequency and the grid voltage. Thereby, the control unit 15 of the first electric power conversion device 10 determines that the voltage drops instantaneously in the event a power outage occurs. When an off-grid AC voltage is output from the second electric power conversion device 20, the control unit 15 determines that the grid 2 has returned to normal.

When the control unit 25 of the second electric power conversion device 20 controls the output voltage of the inverter 22 to a level equal to lower than the level at which the undervoltage relay (UVR) of the first electric power conversion device 10 detects an undervoltage for a detection time or longer, the first electric power conversion device 10 stops operating due to abnormality detection. When a period of time equal to or longer than the detection time elapses after the control unit 25 reduces the output voltage of the inverter 22, the control unit 25 restores the output voltage of the inverter 22 to original.

The method for turning off the parallel-off relay RY6 and the method for changing the output voltage of the inverter 22 have been described as methods for exercising control to prevent excessive power generation. Either one of the former method and the latter method may be used, or both may be used in combination.

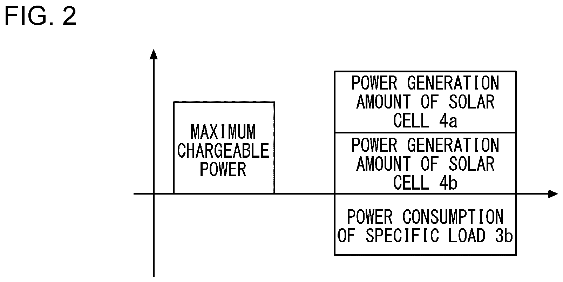

Fig. 2 is a diagram for explaining excessive power generation. Excessive power generation refers to a state "power generation amount of first solar cell 4a + power generation amount of second solar cell 4b - power consumption of specific load 3b" > "maximum chargeable power of power storage unit 5". In an excessive power generation state, the generated power will be in surplus, and there will be nowhere for the power to go. When an excessive power generation state occurs, the function for detection of overcurrent to the power storage unit 5, the function for detection of overvoltage of the DC bus Bd, etc. are activated, and the second electric power conversion device 20 stops abnormally. When the output voltage of the second electric power conversion device 20 is exhausted, the first electric power conversion device 10 also stops abnormally.

Referring to Fig. 2, the power generation amount of the first solar cell 4a cannot be controlled from the second electric power conversion device 20 because the first electric power conversion device 10 and the second electric power conversion device 20 are not connected by a communication line. Meanwhile, the power generation amount of the second solar cell 4b can be controlled by the second electric power conversion device 20. The power consumption of the specific load 3b cannot basically be controlled from the second electric power conversion device 20. When a HEMS (Home Energy Management System) controller is installed in the customer premise, it is possible to control the power consumption of a load such as an air conditioner, but, in this embodiment, it is assumed that the power consumption of the specific load 3b cannot be controlled.

When an excessive power generation state occurs, the voltage of the DC bus Bd of the second electric power conversion device 20 rises. The converter control circuit 27 of the second electric power conversion device 20 includes a function of controlling the boost ratio of the DC/DC converter 26 so that the voltage of the DC bus Bd maintains a target value. When the voltage of the DC bus Bd exceeds the target value, the converter control circuit 27 controls the boost ratio of the DC/DC converter 26 to reduce the output power of the second solar cell 4b. When the voltage of the DC bus Bd does not drop to the target value or less even if the output power of the second solar cell 4b is reduced, the converter control circuit 27 blocks the gate of the DC/DC converter 26 to stop power generation of the second solar cell 4b.

This control is executed based on the measured value of the voltage of the DC bus Bd, and the power generation amount of the second solar cell 4b can be adjusted instantly. The converter control circuit 27 does not need to receive an instruction signal for power generation amount of the second solar cell 4b from the control unit 25. Therefore, the control unit 25 does not need to monitor the charging power from the second solar cell 4b to the power storage unit 5.

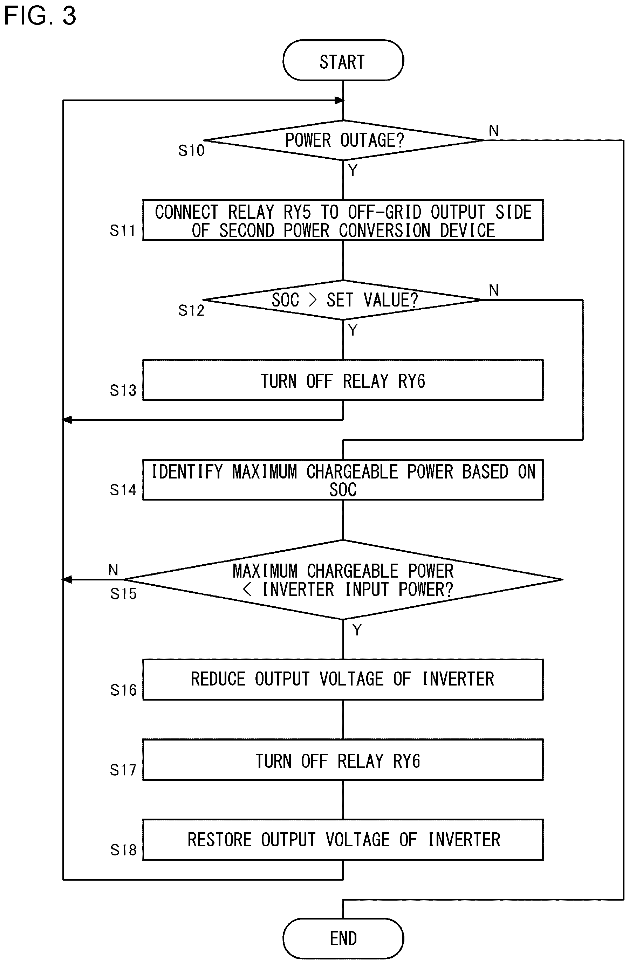

Fig. 3 is a flowchart for explaining an exemplary operation of the second electric power conversion device 20 according to the embodiment in the event of a power outage. During a power outage of the grid 2 (Y in S10), the control unit 25 connects the output switching relay RY5 to the off-grid output path side of the second electric power conversion device 20 (S11). The control unit 25 compares the SOC of the power storage unit 5 with the set value (e.g., 98%) (S12), and when the SOC exceeds the set value (Y in S12), the control unit 25 turns off the parallel-off relay RY6 (S13). A transition to step S10 is made. While the SOC does not exceed the set value (N in S12), a transition to step S14 is made.

The control unit 25 identifies the maximum chargeable power of the power storage unit 5 based on the SOC of the power storage unit 5 (S14). The control unit 25 compares the maximum chargeable power of the power storage unit 5 with the power input to the AC side of the inverter 22 (hereinafter referred to as inverter input power) (S15). When the inverter input power exceeds the maximum chargeable power (Y in S15), the control unit 25 reduces the output voltage of the inverter 22 (S16). The control unit 25 turns off the parallel-off relay RY6 (S17). When the parallel-off relay RY6 is turned off, the control unit 25 restores the output voltage of the inverter 22 (S18). A transition to step S10 is made. When the inverter input power does not exceed the maximum chargeable power (N in S15), a transition to step S10 is made.

In the exemplary operation shown in Fig. 3, a system configuration in which the response of the parallel-off relay RY6 is slow is assumed. For example, a system configuration in which the control unit 25 is implemented by cooperation of a microcontroller inside the housing of the second electric power conversion device 20 and a microcontroller of a remote control setting device outside the housing may be used. When the two microcontrollers are connected by a low-speed serial communication standard interface such as RS-485 in that system configuration, it may take several seconds or more for the parallel-off relay RY6 to be actually turned off after the inverter input power exceeds the maximum chargeable power.

Meanwhile, the decrease in the output voltage of the inverter 22 is instantly reflected in the output voltage of the first electric power conversion device 10 so that the first electric power conversion device 10 is stopped instantly after the inverter input power exceeds the maximum chargeable power. When the output voltage of the inverter 22 is restored, however, the first electric power conversion device 10 resumes its operation. In this case, resumption and stop of the operation of the first electric power conversion device 10 may be frequently repeated.

In the exemplary operation shown in Fig. 3, the operation of the first electric power conversion device 10 is prevented from being frequently resumed and stopped, by restoring the output voltage of the inverter 22 after the parallel-off relay RY6 is turned off. The control unit 25 may turn on the parallel-off relay RY6 when, for example, the SOC of the power storage unit 5 drops to a predetermined value or at the time of day when the amount of solar radiation is small. In either case, the possibility that the inverter input power exceeds the maximum chargeable power is reduced.

When effective utilization of the generated power of the first solar cell 4a is prioritized, the process in step S17 may be omitted in the exemplary operation shown in Fig. 3.

As described above, it is possible, according to this embodiment, to utilize the generated power of the first solar cell 4a efficiently while suppressing unnecessary stop of the entire electric power conversion system 1 in the event of a power outage. Further, it is not necessary to improve the internal configuration of the existing first electric power conversion device 10, and the existing first electric power conversion device 10 can be used as it is. Therefore, the cost of introducing the second electric power conversion device 20 additionally is suppressed.

Fig. 4 is a diagram for explaining the electric power conversion system 1 according to comparative example 1. In comparative example 1, the second electric power conversion device 20 is a power conditioner of the power storage system, and the second solar cell 4b is not installed. Further, the off-grid output of the second electric power conversion device 20 and the on-grid output of the first electric power conversion device 10 are not coordinated. In this configuration, the off-grid output of the first electric power conversion device 10 becomes unstable in the event of a power outage. Further, the power storage unit 5 cannot be charged from the first solar cell 4a.

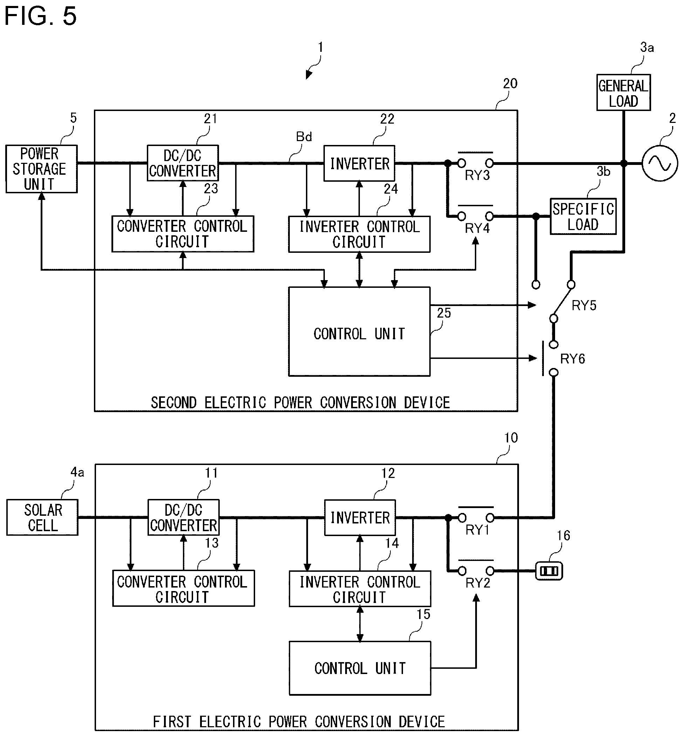

Fig. 5 is a diagram for explaining the electric power conversion system 1 according to comparative example 2. In comparative example 2, the second electric power conversion device 20 is a power conditioner of the power storage system, and the second solar cell 4b is not installed. In this configuration, the control unit 25 can avoid excessive power generation by changing the output voltage of the inverter 22 when the power supplied from the DC/DC converter 21 to the power storage unit 5 exceeds the maximum chargeable power.

Meanwhile, if the output voltage of the inverter 22 in the configuration of the electric power conversion system 1 shown in Fig. 1 is changed when the power supplied from the DC/DC converter 21 to the power storage unit 5 exceeds the maximum chargeable power, the output voltage of the inverter 22 fluctuates frequently due to the charging of the power storage unit 5 from the second solar cell 4b.

In the technology disclosed in the above embodiment, on the other hand, it is possible to avoid frequent fluctuations in the output voltage of the inverter 22 by comparing the inverter input power with the maximum rechargeable power. The technology disclosed in the above embodiment can also be applied to the electric power conversion system 1 according to comparative example 2 shown in Fig. 5 and is a highly versatile technology.

The present disclosure has been described based on the embodiment. The embodiment is intended to be illustrative only and it will be understood by those skilled in the art that various modifications to combinations of constituting elements and processes are possible and that such modifications are also within the scope of the present disclosure.

In the above embodiment, the first solar cell 4a and the second solar cell 4b are examples of power generators that generate electricity by using renewable energy. Instead of at least one of the first solar cell 4a or the second solar cell 4b, a wind power generator, a micro hydroelectric generator, etc. may be used. When an AC output generator is used, an AC/DC converter is used instead of the DC/DC converter.

In the above embodiment, a semiconductor switch may be used in at least one of the on-grid relay RY1, the off-grid output relay RY2, the on-grid relay RY3, the off-grid output relay RY4, the output switching relay RY5, or the parallel-off relay RY6.

In the above embodiment, the method of reducing the output voltage of the inverter 22 has been described as a method to prevent excessive power generation by changing the output voltage of the inverter 22. In this regard, an overvoltage relay (OVR) provided in the first electric power conversion device 10 may be used. The grid connection regulations stipulate that the output voltage of the first electric power conversion device 10 is raised to 115% or higher for 1 second continuously as a condition for the overvoltage relay (OVR) to detect an overvoltage.

When the control unit 25 of the second electric power conversion device 20 controls the output voltage of the inverter 22 to a level equal to or higher than the level at which the overvoltage relay (OVR) of the first electric power conversion device 10 detects an overvoltage for a detection time or longer, the first electric power conversion device 10 stops operating due to abnormality detection. When a period of time equal to or longer than the detection time elapses after the control unit 25 raises the output voltage of the inverter 22, the control unit 25 restores the output voltage of the inverter 22 to original.

An overfrequency relay (OFR) or an underfrequency relay (UFR) provided in the first electric power conversion device 10 may be used. The control unit 25 can change the frequency of the output voltage of the inverter 22 to stop the first electric power conversion device 10.

When the first electric power conversion device 10 includes a voltage rise suppression function, the control unit 25 can suppress the output power of the first electric power conversion device 10 by raising the output voltage of the inverter 22 to a voltage rise suppression value of the first electric power conversion device 10 or higher. In this case, it is difficult for excessive power generation to occur.

The embodiments may be defined by the following items.

[Item 1] An electric power conversion system (1) including:
   a first electric power conversion device (10) capable of converting a power generated by a power generator (4a) that generates power by using renewable energy into an AC power of a predetermined voltage and outputting the AC power to a power receiving point of a power grid (2); and
   a second electric power conversion device (20) including a converter (21) capable of charging and discharging a power storage unit (5), an inverter (22) connected between a DC bus (Bd) to which the converter (21) is connected and the power receiving point, and a control unit (25) that controls the inverter (22), wherein
   in the event of a power outage of the power grid (2), an off-grid output path of the second electric power conversion device (20) and an on-grid output path of the first electric power conversion device (10) are connected, and
   when a power input to an AC side of the inverter (22) exceeds or is expected to exceed a maximum chargeable power of the power storage unit (5), the control unit (25) exercises control to suppress or cut off an output of the first electric power conversion device (10).
   According to this system, it is possible to utilize the power generated by the power generator (4a) efficiently while suppressing unnecessary stop of the entire electric power conversion system (1) in the event of a power outage.
[Item 2] The electric power conversion system (1) according to item 1, wherein
   when the power input to the AC side of the inverter (22) exceeds or is expected to exceed the maximum chargeable power of the power storage unit (5), the control unit reduces, based on the maximum chargeable power of the power storage unit (5) and a maximum output current of the first electric power conversion device (10), an output voltage of the inverter (22) so that an output power of the first electric power conversion device (10) is equal to or less than the maximum chargeable power of the power storage unit (5) .
   According to this system, it is possible to restrict the power input to the AC side of the inverter (22) to a level equal to or less than the maximum chargeable power of the power storage unit (5) and prevent excessive power generation.
[Item 3] The electric power conversion system (1) according to item 1, wherein
   when the power input to the AC side of the inverter (22) exceeds or is expected to exceed the maximum chargeable power of the power storage unit (5), the control unit (25) changes an output voltage of the inverter (22) to a voltage that causes the first electric power conversion device (10) to stop operating.
   According to this system, it is possible to prevent excessive power generation by stopping the first electric power conversion device (10).
[Item 4] The electric power conversion system (1) according to any one of items 1 through 3, wherein
   when the power input to the AC side of the inverter (22) exceeds or is expected to exceed the maximum chargeable power of the power storage unit (5), the control unit (25) turns off a switch (RY6) inserted in an output path of the first electric power conversion device (10).
   According to this system, it is possible to prevent excessive power generation by terminating coordination with the first electric power conversion device (10).
[Item 5] The electric power conversion system (1) according to any one of items 1 through 3, wherein
   when the maximum chargeable power of the power storage unit (5) is less than a first set value, the control unit (25) turns off a switch (RY6) inserted in an output path of the first electric power conversion device (10).
   According to this system, it is possible to prevent excessive power generation by terminating coordination with the first electric power conversion device (10) before the fact.
[Item 6] The electric power conversion system (1) according to any one of items 1 through 3, wherein
   when an SOC (State Of Charge) of the power storage unit (5) exceeds a second set value, the control unit turns off a switch (RY6) inserted in an output path of the first electric power conversion device (10).
   According to this system, it is possible to prevent excessive power generation by terminating coordination with the first electric power conversion device (10) before the fact.
[Item 7] The electric power conversion system (1) according to any one of items 1 through 6, wherein
   the second electric power conversion device (20) further includes a converter (26) for a power generator (4b) capable of adjusting a voltage of a power generated by a further power generator (4b) that generates power by using renewable energy and outputting an adjusted power to the DC bus (Bd), and
   when a voltage of the DC bus (Bd) exceeds a target value, the converter (26) for a power generator (4b) reduces an output power.
   According to this system, it is possible to instantly prevent an excessive power from being generated due to the power generated by the further power generator (4b).
[Item 8] An electric power conversion device (20) that can be connected to a further electric power conversion device (10) capable of converting a power generated by a power generator (4a) that generates power using renewable energy into an AC power of a predetermined voltage and outputting the AC power to a power receiving point of a power grid (2), including:
   a converter (21) capable of charging and discharging a power storage unit (5);
   an inverter (22) connected between a DC bus (Bd) to which the converter (21) is connected and the power receiving point, and
   a control unit (25) that controls the inverter (22), wherein
   in the event of a power outage of the power grid (2), an off-grid output path of the electric power conversion device (20) and an on-grid output path of the further electric power conversion device (10) are connected, and
   when a power input to an AC side of the inverter (22) exceeds or is expected to exceed a maximum chargeable power of the power storage unit (5), the control unit (25) exercises control to suppress or cut off an output of the further electric power conversion device (10).

According to this system, it is possible to utilize the power generated by the power generator (4a) efficiently while suppressing unnecessary stop of the electric power conversion device (20) and the further electric power conversion device (10) in the event of a power outage.

### [INDUSTRIAL APPLICABILITY]

The present disclosure can be used in solar photovoltaic power generation systems.

### [REFERENCE SIGNS LIST]

1 electric power conversion system, 2 grid, 3a general load, 3b specific load, 4A first solar cell, 4b second solar cell, 5 power storage unit, 10 first electric power conversion device, 11 DC/DC converter, 12 inverter, 13 converter control circuit, 14 inverter control circuit, 15 control unit, 16 AC outlet, 20 second electric power conversion device, 21 DC/DC converter, 22 inverter, 23 converter control circuit, 24 inverter control circuit, 25 control unit, 26 DC/DC converter, 27 converter control circuit, RY1 on-grid relay, RY2 off-grid output relay, RY3 on-grid relay, RY4 off-grid output relay, RY5 output switching relay, RY6 parallel-off relay, Bd DC bus.

## Claims

1. An electric power conversion system comprising:
a first electric power conversion device capable of converting a power generated by a power generator that generates power by using renewable energy into an AC power of a predetermined voltage and outputting the AC power to a power receiving point of a power grid; and
a second electric power conversion device including a converter capable of charging and discharging a power storage unit, an inverter connected between a DC bus to which the converter is connected and the power receiving point, and a control unit that controls the inverter, wherein
in the event of a power outage of the power grid, an off-grid output path of the second electric power conversion device and an on-grid output path of the first electric power conversion device are connected, and
when a power input to an AC side of the inverter exceeds or is expected to exceed a maximum chargeable power of the power storage unit, the control unit exercises control to suppress or cut off an output of the first electric power conversion device.

2. The electric power conversion system according to claim 1, wherein
when the power input to the AC side of the inverter exceeds or is expected to exceed the maximum chargeable power of the power storage unit, the control unit reduces, based on the maximum chargeable power of the power storage unit and a maximum output current of the first electric power conversion device, an output voltage of the inverter so that an output power of the first electric power conversion device is equal to or less than the maximum chargeable power of the power storage unit.

3. The electric power conversion system according to claim 1, wherein
when the power input to the AC side of the inverter exceeds or is expected to exceed the maximum chargeable power of the power storage unit, the control unit changes an output voltage of the inverter to a voltage that causes the first electric power conversion device to stop operating.

4. The electric power conversion system according to any one of claims 1 through 3, wherein
when the power input to the AC side of the inverter exceeds or is expected to exceed the maximum chargeable power of the power storage unit, the control unit turns off a switch inserted in an output path of the first electric power conversion device.

5. The electric power conversion system according to any one of claims 1 through 3, wherein
when the maximum chargeable power of the power storage unit is less than a first set value, the control unit turns off a switch inserted in an output path of the first electric power conversion device.

6. The electric power conversion system according to any one of claims 1 through 3, wherein
when an SOC (State Of Charge) of the power storage unit exceeds a second set value, the control unit turns off a switch inserted in an output path of the first electric power conversion device.

7. The electric power conversion system according to any one of claims 1 through 6, wherein
the second electric power conversion device further includes a converter for a power generator capable of adjusting a voltage of a power generated by a further power generator that generates power by using renewable energy and outputting an adjusted power to the DC bus, and
when a voltage of the DC bus exceeds a target value, the converter for a power generator reduces an output power.

8. An electric power conversion device that can be connected to a further electric power conversion device capable of converting a power generated by a power generator that generates power using renewable energy into an AC power of a predetermined voltage and outputting the AC power to a power receiving point of a power grid, comprising:
a converter capable of charging and discharging a power storage unit;
an inverter connected between a DC bus to which the converter is connected and the power receiving point, and
a control unit that controls the inverter, wherein
in the event of a power outage of the power grid, an off-grid output path of the electric power conversion device and an on-grid output path of the further electric power conversion device are connected, and
when a power input to an AC side of the inverter exceeds or is expected to exceed a maximum chargeable power of the power storage unit, the control unit exercises control to suppress or cut off an output of the further electric power conversion device.
